# EUROPÄISCHE PATENTSCHRIFT

(11) **EP 2 979 925 B1**
(45) Veröffentlichungstag und Bekanntmachung des Hinweises auf die Patenterteilung: **28.09.2016**
(21) Anmeldenummer: 15001961.0
(22) Anmeldetag: 01.07.2015
(51) Int. Cl.: B60Q 3/02, F21K 99/00, B64D 11/00

(54) **Lichtemittierende verbundanordnung sowie verfahren zu deren herstellung**
Light emitting compound assembly and method for manufacturing it
Agencement composite electroluminescent et procede de sa fabrication

(30) Priorität: 29.07.2014 DE 102014011170
(43) Veröffentlichungstag der Anmeldung: 03.02.2016
(73) Patentinhaber: Diehl Aircabin GmbH, 88471 Laupheim (DE)
(72) Erfinder: Staudigel, Norbert, DE - 89233 Neu-Ulm (DE); Steffen, Eckhard, DE - 90559 Burgthann (DE); Graf, Oleg, DE - 89257 Illertissen (DE)
(74) Vertreter: Diehl Patentabteilung

(56) Entgegenhaltungen:
- EP-A1- 1 933 086
- DE-A1- 19 811 076
- US-A1- 2007 247 842
- US-A1- 2009 059 609

## Beschreibung

Die Erfindung betrifft eine lichtemittierende Verbundanordnung zur stationären Anordnung in einem Innenraum eines Flugzeugs, mit einer Boden- und einer Deckschicht, wobei die Deckschicht eine Prepreg-Schicht ist, mit einem Kernabschnitt, der zumindest bereichsweise zwischen der Boden- und der oberen Deckschicht angeordnet ist, mit mindestens einer Leuchteinrichtung, die in dem Kernabschnitt integriert ist.

Innenbeleuchtungen in Flugzeugen dienen zur Ausleuchtung von Innenkabinen und sollen hierbei eine möglichst angenehme Lichtatmosphäre für Passagiere schaffen. Für die Innenbeleuchtung sind beispielsweise Leuchtdioden als Leuchtmittel bekannt.

Beispielsweise beschreibt die Druckschrift DE 10 2006 008 385 A1 eine ein- oder mehrschichtige Kunststoffhaut als Oberflächenbelag von beschichteten Gegenständen. In der Kunststoffhaut sind Bereiche angeordnet, in denen die Kunststoffhaut eine Schalt-, Sensor- oder Signalübertragungsfunktion aufweist. Beispielsweise sind die Bereiche mit der Schalt-, Sensor- oder Signalübertragungsfunktion an der Außenoberfläche der Kunststoffhaut angeordnet. Die Schalt-, Sensor- oder Signalübertragungselemente sind bevorzugt in Form von Folien ausgebildet.

Aus der DE 198 11 076 A1 ist eine Schichtstoffplatte bekannt, in die lichtemittierende Dioden eingebracht sind. Die US 2009/0059690 A1 offenbart eine Verbundanordnung, in die LEDs integriert sind.

Der Erfindung liegt die Aufgabe zugrunde, eine funktional verbesserte und einfach herzustellende lichtemittierende Verbundanordnung bereitzustellen. Diese Aufgabe wird durch eine lichtemittierende Verbundanordnung mit den Merkmalen des Anspruchs 1 und durch ein Verfahren zur Herstellung der lichtemittierenden Verbundanordnung mit den Merkmalen des Anspruchs 10 gelöst. Bevorzugte oder vorteilhafte Ausführungsformen ergeben sich aus den Unteransprüchen, der nachfolgenden Beschreibung und/oder den beigefügten Figuren.

Es wird eine lichtemittierende Verbundanordnung zur stationären Anordnung in einem Innenraum eines Flugzeugs vorgeschlagen. Unter stationär ist insbesondere eine ortsfeste Anordnung in dem Innenraum zu verstehen. Insbesondere weist die lichtemittierende Verbundanordnung mehrere, in einem Verbund schichtweise flächig miteinander verbundene Schichten auf. Besonders bevorzugt ist die lichtemittierende Verbundanordnung ein Sandwichverbundbauteil mit mehreren Sandwichschichten.

Die Verbundanordnung umfasst eine Boden- und eine Deckschicht. Die Deckschicht ist eine Prepreg-Schicht. Optional ist der Prepreg ein Faserverbundwerkstoff. Vorzugsweise ist der Prepreg als ein Halbzeug aus Endlosfasern und einer ungehärteten duroplastischen oder thermoplastischen Kunststoffmatrix. Als Endlosfasern werden bevorzugt Kohlenstofffasern, alternativ beispielsweise auch Glasfasern, Basaltfasern oder Aramidfasern verarbeitet. Optional ergänzend ist die Bodenschicht eine Prepreg-Schicht. Vorteile von Prepregs sind einerseits die gute Formbarkeit während der Fertigung sowie als Mischwerkstoff die höherwertigen Eigenschaften im Vergleich zu Einzelwerkstoffen.

Die Verbundanordnung umfasst einen Kernabschnitt, der zumindest bereichsweise zwischen der Boden- und der Deckschicht angeordnet ist. Besonders bevorzugt bilden der Kernabschnitt, die Boden- und die Deckschicht die Sandwichschichten der Verbundanordnung als das Sandwichverbundbauteil. Das Sandwichverbundbauteil erzielt ein deutlich verringertes Gewicht gegenüber herkömmlichen Bauteilen aufgrund der geringen Dichte des zumindest teilweise in dem Kernabschnitt verwendeten Materials und/oder der verwendeten Bauform sowie ausreichende Festigkeitswerte durch eine geeignete Decklagenmaterialauswahl.

Die lichtemittierende Verbundanordnung umfasst mindestens eine als Lichtquelle ausgebildete Leuchteinrichtung, die in dem Kernabschnitt integriert ist. Unter einer Lichtquelle ist ein Körper zu verstehen, der dafür ausgelegt ist, hauptsächlich sichtbares Licht auszusenden, das durch die Umwandlung von Energie mit Hilfe des Körpers erzeugt wird. Insbesondere ist die mindestens eine Leuchteinrichtung zur Lichtausgabe in den Flugzeuginnenraum des Flugzeugs ausgebildet. Bei der Integration ist insbesondere eine verliersichere Fixierung, im Speziellen eine nicht zerstörungsfreie Entnahme der mindestens einen Leuchteinrichtung zu verstehen. Beispielsweise ist die Leuchteinrichtung eine Beleuchtungsanzeige, insbesondere eine Sitzplatzanzeige an einer Kabinenwand, eine Personenleitsystemanzeige, ein sogenannter Sternenhimmel und/oder eine Beleuchtungseinrichtung zur Beleuchtung in dem Innenraum des Flugzeugs.

Vorzugsweise bildet die Bodenschicht eine Unterseite, in einer Einbausituation insbesondere eine zum Innenraum abgewandte Seite der Verbundanordnung. Beispielsweise ist die Bodenschicht zur mittelbaren oder unmittelbaren Anordnung auf einer Tragstruktur in dem Flugzeug geeignet und/oder ausgebildet. Die Deckschicht ist in der Einbausituation insbesondere eine mittel- oder unmittelbar zum Innenraum gewandte Seite. Insbesondere erfolgt die Lichtausgabe der mindestens einen Leuchteinrichtung über und/oder in Richtung der Deckschicht.

Im Rahmen der Erfindung wird vorgeschlagen, dass die Deckschicht mit der in dem Kernabschnitt integrierten Leuchteinrichtung ausgehärtet ist. Optional ergänzend ist die Bodenschicht, insbesondere als die Prepreg-Schicht, mit der in dem Kernabschnitt integrierten Leuchteinrichtung ausgehärtet. Somit erfolgt die Integration der Leuchteinrichtung während der Herstellung, insbesondere während eines Verpressens der Schichten der Verbundanordnung. Im Speziellen erfolgt keine nachträgliche Anbringung der mindestens einen Leuchteinrichtung an der fertigen bereits ausgehärteten Verbundanordnung.

Von Vorteil ist, dass durch die Integration der mindestens einen Leuchteinrichtung während der Herstellung der lichtemittierenden Verbundanordnung, insbesondere während des Verpressens der Schichten, sonst erforderliche Fertigungsschritte wie ein Ausfräsen einer Aufnahme für die Leuchteinrichtung, das Einsetzen der Leuchteinrichtung in die Aufnahme und die Befestigung der Leuchteinrichtung in der Aufnahme entfallen. Dadurch können Arbeitszeit und hierfür anfallende Kosten eingespart werden. Weiterhin ist von Vorteil, dass die Leuchteinrichtung aufgrund der Integration im Kernabschnitt fixiert ist und damit ein Gehäuse für die Leuchteinrichtung entfallen kann. Vorteilhaft ist weiterhin, dass die im Kernabschnitt integrierte Leuchteinrichtung voll funktionsfähig ist und zugleich positive optische Eigenschaften aufweist.

Erfindungsgemäß umfasst der Kernabschnitt einen Stützkern oder ist durch diesen gebildet. Vorzugsweise kontaktiert der Stützkern die Boden- und/oder die Deckschicht zumindest bereichsweise. Besonders bevorzugt ist der Stützkern mit der Boden- und/oder der Deckschicht stoffschlüssig verbunden. Beispielsweise ist der Stützkern ein Schaumkern, jedoch ist es besonders bevorzugt, dass dieser ein Wabenkern ist. Beispielsweise ist der Wabenkern aus einem Papier- und/oder Kartonmaterial. Insbesondere wird für den Wabenkern ein beschichtetes Aramidpapier verwendet. Dies hat insbesondere Vorteile im Hinblick auf ein reduziertes Gewicht der Verbundanordnung.

Erfindungsgemäß weist der Stützkern mindestens einen Aufnahmebereich auf, in dem die mindestens eine Leuchteinrichtung angeordnet ist. Der Aufnahmebereich weist eine Form und Größe der Leuchteinrichtung auf und/oder ist an diese angepasst. Beispielsweise ist der Aufnahmebereich eine Ausnehmung, insbesondere ein Sackloch, in die die mindestens eine Leuchteinrichtung eingesetzt ist. Hierbei ist bevorzugt, dass die Ausnehmung, insbesondere das Sackloch der Deckschicht zugewandt ist, um die Lichtausgabe der Leuchteinrichtung in Richtung der Deckschicht zu erhalten. Besonders bevorzugt ist der Aufnahmebereich ein Durchbruch, so dass die Leuchteinrichtung vorzugsweise mittel- oder unmittelbar auf der Bodenschicht angeordnet ist.

Erfindungsgemäß ist der Aufnahmebereich mit einem Füller in Form eines Klebstoffs aufgefüllt, so dass die Leuchteinrichtung zumindest abschnittsweise in dem Klebstoff eingebettet ist. Somit ist die Leuchteinrichtung durch den Füller bzw. durch den Klebstoff insbesondere unverlierbar in dem Aufnahmebereich fixiert. Beispielsweise ist der Füller ein Epoxidharz, besonders bevorzugt ein Spleißkleber. Bei dem Spleißkleber handelt es sich insbesondere um einen unter Wärme aufschäumenden bzw. ausdehnenden und dann aushärtenden Kleber. Der Füller, insbesondere der Klebstoff erweist sich neben der sicheren Fixierung der mindestens einen Leuchteinrichtung von Vorteil, um beispielsweise einen Versatz zwischen mehreren Leuchteinrichtungen sowie Unebenheiten o. ä. auszugleichen, so dass eine geglättete Oberfläche bereitgestellt ist. Des Weiteren kann für das Aushärten des Spleißklebers die zum Aushärten der Deck- und optional ergänzend der Bodenschicht eingebrachten Wärme ausgenutzt werden. Hierfür ist insbesondere vorgesehen, dass der Spleißkleber und die Deck- und optional die Bodenschicht bei der gleichen eingebrachten Erwärmtemperatur ausreagieren. Somit kann das Aushärten des Spleißklebers und folglich die Fixierung der Leuchteinrichtung parallel zur Aushärtung der Deck- und optional ergänzend der Bodenschicht erfolgen. Auf diese Weise sind der Energiebedarf und die Anzahl der Fertigungsschritte reduziert.

Die Leuchteinrichtung schließt zumindest abschnittsweise mit einer den Aufnahmebereich abschließenden Klebstoffoberfläche bündig ab. Die Klebstoffoberfläche ist durch den Füller, insbesondere den Klebstoff gebildet. Somit kann das emittierte Licht von dem Füller ungehindert ausgegeben werden. Als eine alternative Ausführungsform deckt der Füller die Leuchteinrichtung insbesondere vollständig ab. Der Füller ist zumindest zur partiellen Lichttransmission transluzent oder transparent.

Es ist möglich, dass die Deckschicht sich sowohl über den Stützkern, als auch über die Leuchteinrichtung und/oder über die den Aufnahmebereich abdeckende Kleberoberfläche erstreckt. Um bei dieser konstruktiven Ausführungsform die Lichtausgabe des emittierten Lichts der mindestens einen Leuchteinrichtung dennoch zu erhalten, kann vorgesehen sein, dass die Deckschicht zumindest im Bereich der Leuchteinrichtung lichtdurchlässig ist. Unter der Lichtdurchlässigkeit ist eine Lichttransmission von mindestens 50 Prozent, insbesondere von mindestens 80 Prozent zu verstehen. Jedoch bei einer besonders bevorzugten konstruktiven Umsetzung umfasst die Deckschicht mindestens eine Aussparung für die im Aufnahmebereich angeordnete Leuchteinrichtung. Insbesondere weist die Aussparung eine Größe, insbesondere eine Form, einen Flächeninhalt und/oder Umfang auf, die eine ungehinderte Lichtausgabe des emittierten Lichts der Leuchteinrichtung ermöglicht. Hierbei können die Form, der Flächeninhalt und/oder der Umfang anders bzw. kleiner als der der Leuchteinrichtung gewählt sein, so dass eine Montierbarkeit der Leuchteinrichtung über die Aussparung ausgeschlossen ist. Durch die Aussparung ist ein ansonsten durch die Deckschicht resultierender Lichtverlust vermieden.

Die im Füller, insbesondere Klebstoff eingebettete Leuchteinrichtung schließt bündig mit einer Oberseite der Deckschicht ab. Insbesondere ist die Oberseite der Deckschicht die zum Stützkern abgewandte Seite. Insbesondere sind für den bündigen Abschluss die Klebstoffoberfläche und/oder die Oberseite der Deckschicht gespachtelt und/oder geschliffen. Somit sind Rückstände der Spachtelmasse bzw. Schleifspuren ggf. unter dem Mikroskop erkennbar.

Die Deckschicht als die Prepreg-Schicht weist im Allgemeinen eine rein funktionale Oberflächengestaltung auf. Liegt die Aussparung vor, ist zudem die Leuchteinrichtung und/oder die Klebstoffoberfläche nicht durch die Deckschicht abgedeckt und wären somit freiliegend. Vor diesem Hintergrund ist bevorzugt vorgesehen, dass die lichtemittierende Verbundanordnung eine Außenschicht umfasst, die auf der Deckschicht, der Leuchteinrichtung und/oder auf der den Aufnahmebereich abschließenden Klebstoffoberfläche angeordnet ist. Der zuvor beschriebene bündige Abschluss der im Klebstoff eingebetteten Leuchteinrichtung mit der Oberseite der Deckschicht ermöglicht vorteilhafterweise eine gleichmäßige, zuverlässige Auflage der Deckschicht. Insbesondere ist die Außenschicht eine Sichtseite der im Flugzeug angeordneten lichtemittierenden Verbundanordnung. Besonders bevorzugt bildet die Außenschicht eine Dekor- und/oder Schutzlage der Verbundanordnung. Optional dient die Außenschicht als Berührschutz für die mindestens eine Leuchteinrichtung. Dadurch kann in vorteilhafter Weise ein sicherer Betrieb der mindestens einen Leuchteinrichtung gewährleistet werden. Die Außenschicht verdeckt die rein funktionale Ausgestaltung der Einzelkomponenten, so dass eine ansprechende Optik der lichtemittierenden Verbundanordnung umgesetzt ist.

Bei einer bevorzugten Weiterbildung ist die Außenschicht lichtdurchlässig, so dass die Lichttransmission des von der Leuchteinrichtung emittierten Lichts über die Außenschicht ermöglicht ist. Weiterhin ist es besonders bevorzugt, dass die Außenschicht transluzent, somit insbesondere licht-, jedoch zumindest teilweise blickundurchlässig ist. Dies führt dazu, dass, die Außenschicht betrachtend, die mindestens eine Leuchteinrichtung im ausgeschalteten Zustand nicht oder nur kaum erkennbar ist und damit die lichtemittierende Verbundanordnung für Passagiere wie eine einfache Wand wirkt. Jedoch erfolgt im eingeschalteten Zustand der Leuchteinrichtung die Lichtausgabe über die Außenschicht. Folglich wird die mindestens eine Leuchteinrichtung erst im Betrieb kenntlich. Auf diese Weise ist eine unauffällige Optik der lichtemittierenden Verbundanordnung erzielt.

In einer möglichen konstruktiven Ausgestaltung ist die Außenschicht ein Lack, eine Folie, ein Glas und/oder ein überlackiertes bzw. beschichtetes Glas. Diese Ausführungsformen ermöglichen eine unkomplizierte Aufbringung, insbesondere Aufdrucken, Aufstreichen, Aufdampfen, Aufkleben der Außenschicht auf die Deckschicht und optional ergänzend auf die Leuchteinrichtung und/oder die Klebstoffoberfläche. Des Weiteren kann insbesondere eine Optik und/oder Haptik der lichtemittierenden Verbundanordnung verbessert und eine Widerstandsfähigkeit erhöht werden.

Bei einer besonders bevorzugten Umsetzung der Erfindung umfasst die lichtemittierende Verbundanordnung eine elektrische Anschlussleitung zur Stromversorgung der mindestens einen Leuchteinrichtung. Insbesondere ist die elektrische Anschlussleitung zumindest bereichsweise zwischen der Bodenschicht und dem Stützkern angeordnet. Vorzugsweise ist die elektrische Anschlussleitung zumindest bereichsweise mittel- oder unmittelbar mit der Bodenschicht und/oder mit dem Stützkern verbunden, insbesondere verklebt. Besonders bevorzugt ist die Leuchteinrichtung bei der Integration in Kernabschnitt mit der Anschlussleitung fest, insbesondere unlösbar verbunden, so dass diese während der Fertigung der Verbundanordnung gemeinsam angeordnet werden. Die feste Verbindung gewährleistet eine zuverlässige elektrische Verbindung. Durch die Anordnung der elektrischen Anschlussleitung zwischen der Bodenschicht und dem Stützkern ist ein nachträgliches Einbringen der Leuchteinrichtung nicht möglich. Beispielsweise ist die elektrische Anschlussleitung ein Steckanschluss, jedoch bevorzugt eine Leiterbahn, besonders bevorzugt eine Leiterplatte. Vorzugsweise ist die elektrische Anschlussleitung, insbesondere die Leiterplatte größer als der Durchbruch und/oder als die Aussparung, so dass eine Montierbarkeit der Leiterplatte hierüber ausgeschlossen ist. Optional umfasst die mindestens eine Leuchteinrichtung die elektrische Anschlussleitung.

Beispielsweise ist die mindestens eine Leuchteinrichtung bzw. die Lichtquelle ein Flächenstrahler. Besonders bevorzugt ist die mindestens eine Leuchteinrichtung bzw. die Lichtquelle eine LED. Hierbei ist es möglich, dass die LED eine OLED ist. Bei einer Mehrzahl an LEDs kann vorgesehen sein, dass diese als ein LED-Bord oder als ein LED-Streifen insbesondere mit der elektrischen Anschlussleitung ausgebildet sind.

Vom konstruktiven Aufbau ist es bevorzugt, dass die Deckschicht und/oder die Bodenschicht als die Prepreg-Schicht ebene, gekrümmte und/oder gebogene Abschnitte aufweisen. Die Prepreg-Schicht ist als Halbzeug insbesondere biegbar ausgebildet, so dass die Prepreg-Schicht sowohl eben, als auch gebogen, gekrümmt oder in einer sonstigen Freiform gefertigt, insbesondere gepresst sein kann. Auf diese Weise ist es möglich, dass sich die lichtemittierende Verbundanordnung an frei gekrümmte Flächen anpasst. Somit können mit der lichtemittierenden Verbundanordnung verschiedene Einbausituationen bedient werden, wodurch die Variabilität und/oder die Integrationsfähigkeit der lichtemittierenden Verbundanordnung erhöht ist.

Bei einer bevorzugten Ausgestaltung der Erfindung ist die Verbundanordnung ein Flugzeugpaneel. Vorzugsweise ist das Flugzeugpaneel zumindest abschnittsweise ein Verkleidungs- oder Ausstattungsbauteil des Flugzeugs. Beispielsweise kann das Flugzeugpaneel Innenseiten des Flugzeugsinnenraums verkleiden. In dieser Funktion kann es eine Boden-, Decken- und/oder Wandverkleidung des Innenraums des Flugzeugs sein. Alternativ oder optional ergänzend kann das Flugzeugpaneel einen Bestandteil einer Innenausstattung des Flugzeugs bilden. Insbesondere kann das Flugzeugpaneel eine Sitzverkleidung oder eine Seitenwand eines Überkopfstaufachs des Flugzeugs sein. Somit handelt es sich bei der lichtemittierenden Verbundanordnung nicht lediglich um eine Beleuchtungs-, sondern zusätzlich auch um ein Verkleidungsinterieur in dem Flugzeug.

Einen weiteren Gegenstand der Erfindung betrifft ein Verfahren zur Herstellung der lichtemittierenden Verbundanordnung wie dies zuvor beschrieben wurde. In einem Schritt werden die Boden- und Deckschicht, der Kernabschnitt sowie die mindestens eine Leuchteinrichtung bereitgestellt. In einem folgenden Schritt wird die mindestens eine Leuchteinrichtung in den Kernabschnitt integriert.

Für die Integration der mindestens einen Leuchteinrichtung ist bevorzugt, dass der mindestens eine Aufnahmebereich in den Stützkern eingebracht wird, in den die Leuchteinrichtung angeordnet, insbesondere eingelegt wird. Der Aufnahmebereich kann ein Sackloch oder ein Durchbruch sein. Bei dem Sackloch wird die Leuchteinrichtung vorzugsweise in dieses eingelegt. Vorzugsweise wird in einem Folgeschritt der Kernabschnitt, insbesondere der Stützkern zwischen der Boden- und der Deckschicht angeordnet. Bei dem Durchbruch ist insbesondere vorgesehen, dass die Leuchteinrichtung zunächst auf die Bodenschicht angeordnet wird, woraufhin der Stützkern mittel- oder unmittelbar auf die Bodenschicht aufgelegt wird und somit die Leuchteinrichtung in dem Aufnahmebereich angeordnet ist. Im Anschluss wird der Aufnahmebereich mit dem Klebstoff aufgefüllt, um die Leuchteinrichtung in dem Aufnahmebereich zumindest teilweise einzubetten und damit insbesondere verliersicher zu fixieren.

Für die Herstellung der Verbundanordnung werden die Deck-, optional ergänzend die Bodenschicht im zusammengelegten Zustand mit dem Kernabschnitt und somit mit der im Kernabschnitt integrierten Leuchteinrichtung ausgehärtet, wodurch der Verbund der Verbundanordnung hergestellt wird. Insbesondere werden die Boden- und Deckschicht sowie der Kernabschnitt in einem Presswerkzeug angeordnet und dort erwärmt. Durch die Erwärmung wird die Kunststoffmatrix der Deckschicht und optional ergänzend die der Bodenschicht unter dem im Presswerkzeug herrschenden Druck zumindest teilweise aufgeschmolzen, so dass sich diese mit dem Stützkern stoffschlüssig verbinden. Anschließend wird die Verbundanordnung abgekühlt, sodass nach einer ausreichenden Erstarrung und damit Aushärtung die Verbundanordnung aus der Form entnommen werden kann.

Die den Aufnahmebereich abdeckende Klebstoffoberfläche wird nach dem Aushärten der Deckschicht bündig zur Deckschicht gespachtelt und/oder geschliffen, so dass z. B. Unebenheiten zumindest teilweise beseitigt und somit eine geeignete Auflage- und/oder Kontaktfläche für die Außenschicht geschaffen ist. In einem folgenden Fertigungsschritt wird die Außenschicht auf die Deckschicht aufgebracht, beispielsweise aufgeklebt, aufgedampft oder aufgesprüht.

Weitere Merkmale, Vorteile und Wirkungen der Erfindung ergeben sich aus der nachfolgenden Beschreibung eines bevorzugten Ausführungsbeispiels der Erfindung. Dabei zeigen:
- Figur 1: einen Querschnitt eines prinzipiellen Aufbaus einer lichtemittierenden Verbundanordnung mit einer Bodenschicht, einem Kernabschnitt und einer Deckschicht, wobei eine Leuchteinrichtung in dem Kernabschnitt integriert ist;
- Figur 2: eine dreidimensionale Darstellung auf eine Sichtseite der lichtemittierenden Verbundanordnung aus Figur 1 mit der im Kernabschnitt integrierten Leuchteinrichtung im ausgeschalteten Zustand;
- Figur 3: die dreidimensionale Darstellung auf die Sichtseite der lichtemittierenden Verbundanordnung aus Figur 1 mit der im Kernabschnitt integrierten Leuchteinrichtung im eingeschalteten Zustand;
- Figur 4: einen schematischen Ablauf eines Verfahrens zur Fertigung der lichtemittierenden Verbundanordnung aus Figur 1.

Einander entsprechende oder gleiche Teile sind in den Figuren jeweils mit den gleichen Bezugszeichen versehen.

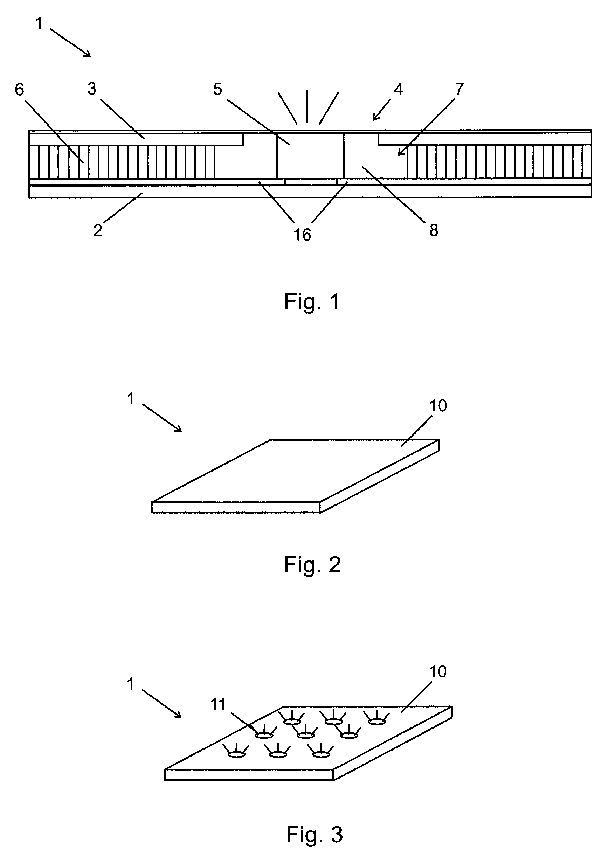

Figur 1 zeigt einen Querschnitt durch eine lichtemittierende Verbundanordnung 1 zur stationären Anordnung in einem Innenraum eines Flugzeugs, wobei eine Schnittlinie parallel zu einer Längserstreckung der lichtemittierende Verbundanordnung 1 verläuft. Beispielsweise ist die Verbundanordnung 1 ein Flugzeugpaneel, wobei das Flugzeugpaneel als ein Verkleidungsbauteil zur Verkleidung des Innenraums und/oder als ein Ausstattungsbauteil zur Ausstattung des Innenraums ausgebildet ist.

Die lichtemittierende Verbundanordnung 1 umfasst eine Boden- und eine Deckschicht 2, 3. Beispielsweise bildet die Bodenschicht 2 eine Unterseite, in einer Einbausituation eine zum Innenraum abgewandte Seite der Verbundanordnung 1. Die Deckschicht 3 ist eine mittelbar zum Innenraum gewandte Seite. Die Deckschicht 3 und optional die Bodenschicht 2 sind jeweils eine Prepreg-Schicht. Bei dem Prepreg handelt es sich insbesondere um ein endlosfaserverstärktes duroplastisches oder thermoplastisches Bauteil.

Ferner weist die Verbundanordnung 1 einen Kernabschnitt 4 auf, der bereichsweise zwischen der Boden- und der Deckschicht 2, 3 angeordnet ist. Bei der Herstellung der Verbundanordnung 1 werden die Bodenschicht 2, der Kernabschnitt 4 und die Deckschicht 3 aufeinander gelegt und miteinander zu einer Sandwichstruktur verpresst.

Die lichtemittierende Verbundanordnung 1 umfasst eine als Lichtquelle ausgebildete Leuchteinrichtung 5 zur Lichtausgabe in den Innenraum des Flugzeugs, wobei auch mehrere Leuchteinrichtungen 5 möglich sind. Die Leuchteinrichtung 5 ist in dem Kernabschnitt 4 integriert und auf diese Weise verliersicher fixiert. Das Licht der Leuchteinrichtung 5 wird in Richtung der Deckschicht 3 emittiert. Bei diesem Ausführungsbeispiel ist die Leuchteinrichtung 5 eine LED.

Die Deckschicht 3 ist mit der in dem Kernabschnitt 4 integrierten Leuchteinrichtung 5 ausgehärtet. Auf diese Weise ist der Fertigungs- sowie Montageaufwand verringert, da beispielsweise eine Einbringung einer Aufnahme für die Leuchteinrichtung 5, die nachträgliche Montage der Leuchteinrichtung 5 sowie der zugehörigen Elektrik vermieden ist.

Der Kernabschnitt 4 weist einen Stützkern 6 auf, der bei diesem Ausführungsbeispiel ein Wabenkern ist. Der Stützkern 6 erzielt eine hohe mechanische Steifigkeit bei vergleichsweise geringem Gewicht. Der Stützkern 6 ist zumindest bereichsweise mit der Boden- und der Deckschicht 2, 3 stoffschlüssig verbunden.

Der Stützkern 6 weist einen Aufnahmebereich 7 auf, in dem die Leuchteinrichtung 5 integriert ist. Der Aufnahmebereich 7 ist bei diesem Ausführungsbeispiel als ein Durchbruch ausgebildet. Jedoch kann ebenso vorgesehen sein, dass der Aufnahmebereich 7 ein Sackloch ist oder der Durchbruch durch mehrere voneinander beabstandete Stützkerne 6 gebildet wird.

Der Kernabschnitt 4 umfasst einen Klebstoff 8, mit diesem der Aufnahmebereich 7 aufgefüllt ist. Somit ist die Leuchteinrichtung 5 in dem Klebstoff 8 eingebettet. Beispielsweise ist der Klebstoff 8 ein Spleißkleber. Die Leuchteinrichtung 5 schließt mit einer den Aufnahmebereich 7 abschließenden Klebstoffoberfläche bündig ab. Jedoch kann ebenso vorgesehen sein, dass der Klebstoff 8 die Leuchteinrichtung 8 vollständig abdeckt. Hierbei ist der Klebstoff 8 zumindest zur partiellen Lichttransmission transluzent oder transparent auszubilden.

Die Deckschicht 3 umfasst eine Aussparung für die in dem Aufnahmebereich 7 angeordnete Leuchteinrichtung 5, so dass eine von der Deckschicht 3 ungehinderte Lichtausgabe der Leuchteinrichtung 5 möglich ist. Die in dem Klebstoff 8 eingebettete Leuchteinrichtung 5 schließt bündig mit einer Oberseite der Deckschicht 3 ab. Für den bündigen Abschluss und um mögliche Unebenheiten in der den Aufnahmebereich 7 abdeckende Klebstoffoberfläche zu beseitigen, ist diese und optional die Oberseite der Deckschicht 3 gespachtelt und/oder geschliffen.

Die lichtemittierende Verbundanordnung 1 umfasst eine Außenschicht 10, die auf der Deckschicht 3, der Leuchteinrichtung 5 und der Klebstoffoberfläche angeordnet ist und die Sichtseite der Verbundanordnung 1 bildet. Die Außenschicht 10 ist zur Verbesserung einer Optik, zur Isolation, zum Berührschutz der Leuchteinrichtung 5 und/oder zum Schutz der Oberseite der Deckschicht 3 aufgebracht. Beispielsweise ist die Außenschicht 10 ein Lack.

Die Außenschicht 10 ist lichtdurchlässig, so dass die Lichttransmission des von der Leuchteinrichtung 5 emittierten Lichts über die Außenschicht 10 ermöglicht ist. Ferner ist die Außenschicht 10 transluzent, so dass zwar die Lichttransmission ermöglicht, jedoch eine Blickdurchlässigkeit zur Leuchteinrichtung 5 nicht oder nur eingeschränkt ist. Somit erzielt die Außenschicht 10 eine unauffällige Optik der Leuchteinrichtung 5 in der lichtemittierenden Verbundanordnung 1.

Die lichtemittierende Verbundanordnung 1 umfasst zum Anschluss der Leuchteinrichtung 5 an eine Spannungsquelle des Flugzeugs eine elektrische Anschlussleitung 16. Diese verläuft zumindest bereichsweise zwischen der Bodenschicht 2 und dem Stützkern 6. Die elektrische Anschlussleitung 16 ist als eine Leiterbahn ausgebildet und mit Kontakten der Leuchteinrichtung 5 elektrisch leitend verbunden, z. B. an den Kontakten angelötet.

Figuren 2 und 3 zeigen eine dreidimensionale Darstellung auf eine Sichtseite der lichtemittierenden Verbundanordnung 1 aus Figur 1 mit einer Mehrzahl an im Kernabschnitt 4 integrierten Leuchteinrichtungen 5.

In der Figur 2 sind die Leuchteinrichtungen 5 in einem ausgeschalteten Zustand und somit nicht in Betrieb. Durch die transluzente Ausbildung der Außenschicht 10 sind die Leuchteinrichtung 5 nicht oder nur schwer erkennbar. In der Figur 3 hingegen sind die Leuchteinrichtungen 5 in einem eingeschalteten Zustand. Durch die Lichtdurchlässigkeit der Außenschicht 10 bildet sich durch das an der Außenschicht 10 ausgekoppelte Licht eine Lichtkontur 11 an der Außenschicht 10 ab. Die Lichtkontur 11 entspricht beispielsweise der Lichtausgabekontur der Leuchteinrichtung 5. Sollte die Lichtausgabekontur beispielsweise ringartig sein, ist die abgebildete Lichtkontur 11 ebenfalls ringartig.

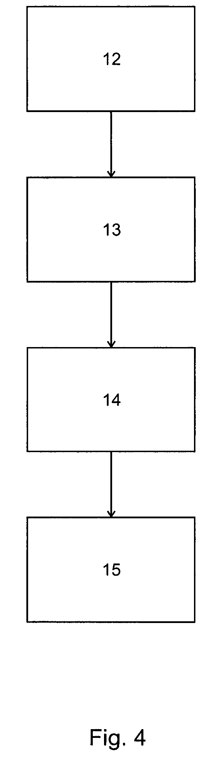

In Figur 4 ist ein schematischer Ablauf eines Verfahrens zur Herstellung der lichtemittierenden Verbundanordnung 1 dargestellt. Das Verfahren umfasst folgende Schritte:
12: Bereitstellung der Boden- und Deckschicht 2, 3, des Kernabschnitts 4 sowie der mindestens einen Leuchteinrichtung 5;
13: Integrieren der mindestens einen Leuchteinrichtung 5 in den Kernabschnitt 4;
14: Anordnen des Kernabschnitts 4 zwischen der Boden- und der Deckschicht 2, 3;
15: Aushärten der Deckschicht 3 und optional ergänzend der Bodenschicht 2.

### Bezugszeichenliste

- 1: Lichtemittierende Verbundanordnung
- 2: Bodenschicht
- 3: Deckschicht
- 4: Kernabschnitt
- 5: Leuchteinrichtung
- 6: Stützkern
- 7: Aufnahmebereich
- 8: Klebstoff
- 10: Außenschicht
- 11: Lichtkontur
- 12: Erster Verfahrensschritt
- 13: Zweiter Verfahrensschritt
- 14: Dritter Verfahrensschritt
- 15: Vierter Verfahrensschritt
- 16: Elektrische Anschlussleitung

## Patentansprüche

1. Lichtemittierende Verbundanordnung (1) zur stationären Anordnung in einem Innenraum eines Flugzeugs,
mit einer Boden- und einer Deckschicht (2, 3),
mit einem Kernabschnitt (4), der zumindest bereichsweise zwischen der Boden- und der Deckschicht (2, 3) angeordnet ist,
mit mindestens einer als Lichtquelle ausgebildeten Leuchteinrichtung (5), die in dem Kernabschnitt (4) integriert ist,
wobei der Kernabschnitt (4) einen Stützkern (6) umfasst, wobei der Stützkern (6) mindestens einen Aufnahmebereich (7) aufweist, in dem die mindestens eine Leuchteinrichtung (5) angeordnet ist und
die Deckschicht (3) mit der in dem Kernabschnitt (4) integrierten Leuchteinrichtung (5) ausgehärtet ist und wobei der Aufnahmebereich (7) mit einem transparenten oder transzulenten Klebstoff (8) aufgefüllt ist, so dass die Leuchteinrichtung (5) zumindest abschnittsweise in dem Klebstoff (8) eingebettet ist, **dadurch gekennzeichnet, dass** die Deckschicht (3) eine Prepreg-Schicht ist, und die Deckschicht (3) mindestens eine Aussparung für die im Aufnahmebereich (7) angeordnete Leuchteinrichtung (5) umfasst, wobei die Leuchteinrichtung (5) bündig und/oder die den Aufnahmebereich (7) abschließende Klebstoffoberfläche mit einer Oberseite der Deckschicht (3) abschließt.

2. Lichtemittierende Verbundanordnung (1) nach Anspruch 1,
**gekennzeichnet durch** eine Außenschicht (10), die auf der Deckschicht (3),
der Leuchteinrichtung (5) und/oder einer den Aufnahmebereich (7) abschließenden Klebstoffoberfläche angeordnet ist.

3. Lichtemittierende Verbundanordnung (1) nach Anspruch 2,
**dadurch gekennzeichnet,**
**dass** die Außenschicht (10) lichtdurchlässig ist.

4. Lichtemittierende Verbundanordnung (1) nach Anspruch 2 oder 3,
**dadurch gekennzeichnet,**
**dass** die Außenschicht (10) transluzent ist.

5. Lichtemittierende Verbundanordnung (1) nach einem der Ansprüche 2 - 4,
**dadurch gekennzeichnet,**
**dass** die Außenschicht (10) ein Lack, eine Folie und/oder ein Glas ist.

6. Lichtemittierende Verbundanordnung (1) nach einem der vorhergehenden Ansprüche,
**gekennzeichnet durch** eine elektrische Anschlussleitung (16) zur Stromversorgung der mindestens einen Leuchteinrichtung (5), wobei die elektrische Anschlussleitung (16) zumindest bereichsweise zwischen der Bodenschicht (2) und dem Stützkern (6) angeordnet ist.

7. Lichtemittierende Verbundanordnung (1) nach einem der vorhergehenden Ansprüche,
**dadurch gekennzeichnet,**
**dass** die mindestens eine Leuchteinrichtung (5) eine LED ist.

8. Lichtemittierende Verbundanordnung (1) nach einem der vorhergehenden Ansprüche,
**dadurch gekennzeichnet,**
**dass** die Deckschicht (3) gekrümmt und/oder gebogen ist.

9. Lichtemittierende Verbundanordnung (1) nach einem der vorhergehenden Ansprüche,
**dadurch gekennzeichnet,**
**dass** die lichtemittierende Verbundanordnung (1) ein Flugzeugpaneel ist.

10. Verfahren zur Herstellung der lichtemittierenden Verbundanordnung (1) nach einem der vorhergehenden Ansprüche,
**gekennzeichnet durch** folgende Schritte:
- (12) Bereitstellen der Boden- und Deckschicht (2, 3), des Kernabschnitts (4) sowie der mindestens einen Leuchteinrichtung (5)
- (13) Integrieren der mindestens einen Leuchteinrichtung (5) in den Kernabschnitt (4)
- (14) Anordnen des Kernabschnitts (4) zwischen der Boden- und der Deckschicht (2, 3)
- (15) Aushärten der Deckschicht (3),
wobei die mindestens eine Leuchteinrichtung (5) in den zugehörigen Aufnahmebereich (7) des Stützkerns (6) angeordnet wird, wobei der Aufnahmebereich (7) mit dem Klebstoff (8) aufgefüllt wird,
wobei eine den Aufnahmebereich (7) abdeckende Klebstoffoberfläche nach dem Aushärten der Deckschicht (3) bündig zur Deckschicht (3) geschliffen wird.

11. Verfahren nach Anspruch 10 zur Herstellung der lichtemittierenden Verbundanordnung nach einem der Ansprüche 2 - 5, wobei auf die Klebstoffoberfläche und auf die Deckschicht (3) die Außenschicht (10) aufgebracht wird.

## Claims

1. Light-emitting composite assembly (1) for stationary arrangement in an interior of an aircraft,
having a bottom layer and a top layer (2, 3), having a core section (4) which, at least in some regions, is arranged between the bottom layer and the top layer (2, 3),
having at least one lighting device (5) which is formed as a light source and is integrated in the core section (4),
the core section (4) comprising a supporting core (6), the supporting core (6) having at least one receiving region (7), in which the at least one lighting device (5) is arranged, and
the top layer (3) being cured with the lighting device (5) integrated in the core section (4), and the receiving region (7) being filled with a transparent or translucent adhesive (8), so that the lighting device (5) is embedded in the adhesive (8), at least in some sections, **characterized in that** the top layer (3) is a prepreg layer, and the top layer (3) comprises at least one recess for the lighting device (5) arranged in the receiving region (7), wherein the lighting device (5) and/or the adhesive surface that closes off the receiving region (7) ends flush with an upper side of the top layer (3).

2. Light-emitting composite assembly (1) according to Claim 1,
**characterized by** an outer layer (10), which is arranged on the top layer (3), the lighting device (5) and/or an adhesive surface that closes off the receiving region (7).

3. Light-emitting composite assembly (1) according to Claim 2,
**characterized in that**
the outer layer (10) is light-transmitting.

4. Light-emitting composite assembly (1) according to Claim 2 or 3,
**characterized in that**
the outer layer (10) is translucent.

5. Light-emitting composite assembly (1) according to one of Claims 2 - 4,
**characterized in that**
the outer layer (10) is a varnish, a film and/or a glass.

6. Light-emitting composite assembly (1) according to one of the preceding claims,
**characterized by** an electric connecting line (16) for the power supply of the at least one lighting device (5), wherein the electric connecting line (16) is arranged between the bottom layer (2) and the supporting core (6), at least in some regions.

7. Light-emitting composite assembly (1) according to one of the preceding claims,
**characterized in that**
the at least one lighting device (5) is an LED.

8. Light-emitting composite assembly (1) according to one of the preceding claims,
**characterized in that**
the top layer (3) is curved and/or bent.

9. Light-emitting composite assembly (1) according to one of the preceding claims,
**characterized in that**
the light-emitting composite assembly (1) is an aircraft panel.

10. Method for producing the light-emitting composite assembly (1) according to one of the preceding claims,
**characterized by** the following steps:
- (12) providing the base layer and top layer (2, 3) of the core section (4) and the at least one lighting device (5)
- (13) integrating the at least one lighting device (5) into the core section (4)
- (14) arranging the core section (4) between the bottom layer and the top layer (2, 3)
- (15) curing the top layer (3)
wherein the at least one lighting device (5) is arranged in the associated receiving region (7) of the supporting core (6), wherein the receiving region (7) is filled with the adhesive (8),
wherein, following the curing of the top layer (3), an adhesive surface covering the receiving region (7) is ground flush with the top layer (3).

11. Method according to Claim 10 for producing the light-emitting composite assembly according to one of Claims 2 - 5,
wherein the outer layer (10) is applied to the adhesive surface and to the top layer (3).

## Revendications

1. Système composite électroluminescent (1) destiné à être disposé de manière stationnaire dans un espace intérieur d'un aéronef,
comportant une couche inférieure et une couche de revêtement (2, 3),
comportant une section centrale (4) qui est disposée au moins par régions entre les couches inférieure et de revêtement (2, 3),
comportant au moins un dispositif d'éclairage (5) réalisé sous la forme d'une source lumineuse, qui est intégré à la section centrale (4),
dans lequel la section centrale (4) comprend un noyau de support (6), dans lequel le noyau de support (6) comporte au moins une région de réception (7) dans laquelle est disposé l'au moins un dispositif d'éclairage (5), et
la couche de revêtement (3) est durcie avec le dispositif d'éclairage (5) intégré à la section centrale (4) et dans lequel la région de réception (7) est remplie d'un adhésif (8) transparent ou translucide de manière à ce que le dispositif d'éclairage (5) soit incorporé au moins par sections dans l'adhésif (8), **caractérisé en ce que** la couche de revêtement (3) est une couche de pré-imprégné et **en ce que** la couche de revêtement (3) comprend au moins un évidement destiné au dispositif d'éclairage (5) disposé dans la région de réception (7), dans lequel le dispositif d'éclairage (5) se raccorde de manière affleurante et/ou la surface d'adhésif recouvrant la région de réception (7) se raccorde à une face supérieure de la couche de revêtement (3).

2. Système composite électroluminescent (1) selon la revendication 1,
**caractérisé par** une couche extérieure (10) qui est disposée sur la couche de revêtement (3), le dispositif d'éclairage (5) et/ou une surface d'adhésif recouvrant la région de réception (7).

3. Système composite électroluminescent (1) selon la revendication 2,
**caractérisé en ce que** la couche extérieure (10) est transparente à la lumière.

4. Système composite électroluminescent (1) selon la revendication 2 ou 3,
**caractérisé en ce que** la couche extérieure (10) est translucide.

5. Système composite électroluminescent (1) selon l'une quelconque des revendications 2-4,
**caractérisé en ce que** la couche extérieure (10) est une peinture, une feuille et/ou un verre.

6. Système composite électroluminescent (1) selon l'une quelconque des revendications précédentes,
**caractérisé par** une ligne de raccordement électrique (16) destinée à alimenter en courant l'au moins un dispositif d'éclairage (5), dans lequel la ligne de raccordement électrique (16) est disposée au moins par régions entre la couche inférieure (2) et le noyau de support (6).

7. Système composite électroluminescent (1) selon l'une quelconque des revendications précédentes, **caractérisé en ce que** l'au moins un dispositif d'éclairage (5) est une LED.

8. Système composite électroluminescent (1) selon l'une quelconque des revendications précédentes, **caractérisé en ce que** la couche de protection (3) est incurvée et/ou arquée.

9. Système composite électroluminescent (1) selon l'une quelconque des revendications précédentes, **caractérisé en ce que** le système composite électroluminescent (1) est un panneau d'aéronef.

10. Procédé de fabrication du système composite électroluminescent (1) selon l'une quelconque des revendications précédentes, **caractérisé par** les étapes suivantes :
- (12) fournir les couches inférieure et de revêtement (2, 3), la section centrale (4) ainsi qu'au moins un dispositif d'éclairage (5),
- (13) intégrer l'au moins un dispositif d'éclairage (5) dans le noyau central (4),
- (14) agencer la section centrale (4) entre les couches inférieure et de revêtement (2, 3),
- (15) durcir la couche de revêtement (3),
dans lequel l'au moins un dispositif, d'éclairage (5) est disposé dans la région de réception correspondante (7) du noyau de support (6), dans lequel la région de réception (7) est remplie de l'adhésif (8),
dans lequel une surface d'adhésif revêtant la région de réception (7) est lissée après le durcissement de la couche de revêtement (3) de manière à affleurer à la couche de revêtement (3).

11. Procédé selon la revendication 10, pour la fabrication du système composite électroluminescent selon l'une quelconque des revendications 2-5,
dans lequel la couche extérieure (10) est appliquée sur la surface d'adhésif et sur la couche de revêtement (3).
